# EUROPÄISCHE PATENTANMELDUNG

(11) **EP 0 961 441 A1**
(43) Veröffentlichungstag der Anmeldung: **01.12.1999**
(21) Anmeldenummer: 98109876.7
(22) Anmeldetag: 29.05.1998
(51) Int. Cl.: H04L 12/56, H04Q 11/04

(54) **Verfahren zum Entfernen von ATM-Zellen aus einer ATM-Kommunikationseinrichtung**

(71) Anmelder: SIEMENS AKTIENGESELLSCHAFT, 80333 München (DE)
(72) Erfinder: Heiss, Herbert, 82008 Unterhaching (DE); Thudt, Raimar, 80995 München (DE)

(57) **Zusammenfassung**

Beim Stand der Technik haben sich eine Mehrzahl von Algorithmen zur Behandlung von Überlastsituationen in ATM-Übertragungssystemen durchgesetzt. Einer dieser Algorithmen ist das bekannte PPD Verfahren. Bei Anwendung dieses Verfahrens wird das ATM-Netz dynamisch nach zu stark belastet, da nicht alle ATM-Zellen verworfen werden können. Die Erfindung löst dieses Problem, indem Regeln aufgestellt werden, durch deren Anwendung diese Verfahren nur noch sehr eingeschränkt zur Anwendung gelangt.

## Beschreibung

Die Erfindung betrifft ein Verfahren gemäß dem Oberbegriff von Patentanspruch 1.

Bei herkömmlichen Paket-Kommunikationssystemen weist ein Paket eine vergleichsweise große und variable Länge auf. Ein System zur Übertragung von Informationen in Paketen mit festen, vorgegebenen Längen wird als ATM (Asynchronous Transfer Mode)-System bezeichnet. Mit einem solchen System lassen sich sprach-, Video- und Datensignale auf die gleiche Weise verarbeiten und übertragen. Die einzelnen Pakete werden üblicherweise Zellen genannt. In den Zellen ist jeweils ein Zellenkopf enthalten, dessen Information eine Vermittlung bzw. Zuordnung der jeweiligen Zelle ermöglicht. In ATM-Kommunikationseinrichtungen, insbesondere Kommunikationsnetzeinrichtungen, ist eine Hochgeschwindigkeits- und Breitband-Übertragung mit einer Übertragungsrate von mehr als 150 Mb/s möglich.

Ein Problem bei ATM-Kommunikationseinrichtungen ist die Höhe der Übertragungsrate auf einer Übertragungsstrecke, wenn sich dort ein Stau von ATM-Zellen gebildet hat. Diese Problematik wird in der deutschen Patentanmeldung 19810058.2 detailliert beschrieben. Dort werden ATM-Systeme angesprochen, in denen ATM-Zellen jeweils zu mehreren einem gemeinsamen Rahmen zugeordnet sind. Bei diesen Rahmen handelt es sich im engeren Sinne uni Datenpakete mit variabler Länge. Wenn beispielsweise eine Zelle eines solchen Rahmens verloren gegangen oder beschädigt worden ist, ist es unerwünscht,daß die verbleibenden Zellen desselben Rahmens über eine Übertragungsstrecke einer ATM-Einrichtung weiter übertragen werden, da nicht mehr die vollständige Information des Rahmens am Ende der Übertragungsstrecke ankommen würde. Das ATM-System wäre damit unnötigerweise dynamisch belastet. Insbesondere bei einem Stau auf der Übertragungsstrecke kommt es daher darauf an, die verbleibenden Zellen des Rahmens möglichst schnell und effektiv zu entfernen.

Es ist daher vorgeschlagen worden,ATM-Zellen eines bestimmten Rahmens jeweils beim Eintreffen einer einzelnen ATM-Zelle am Ende einer Warteschlange zu entfernen. Solche Warteschlangen dienen insbesondere der Verwaltung einer Reihenfolge von ATM-zellen am Ende und/oder am Anfang einer Übertragungsstrecke. Gemäß einem in der oben genannten Patentanmeldung beschriebenen Verfahren, das als Partial Packet Discard (im folgenden PPD) bezeichnet wird, werden die erste und, falls vorhanden, weitere Zellen des Rahmens, die sich bereits in der Warteschlange befinden, nicht entfernt, sondern lediglich alle neu eintreffenden zellen des Rahmens entfernt, mit Ausnahme der letzten Zelle des Rahmens.Das PPD Verfahren hat den Nachteil, daß zumindest die erste und die letzte Zelle des Rahmens weiterhin in der Warteschlange verbleiben müssen.

Aus der oben genannten Patentanmeldung ist ein weiteres Verfahren bekannt, gemäß dem alle Zellen eines Rahmens, von der ersten bis zur letzten Zelle beim Eintreffen in eine Warteschlange aus der ATM-Kommunikationseinrichtung entfernt werden. Dieses Early Packet Discard (im folgenden EPD) genannte Verfahren hat den Vorteil, daß keine Restzellen eines beschädigten oder aus anderen Gründen zu entfernenden Rahmens übrigbleiben und somit der maximal mögliche Platz für andere ATM-Zellen zur Verfügung steht. Das EPD Verfahren ist jedoch nicht auf Rahmen anwendbar, deren erste Zelle bereits der Warteschlage hinzugefügt worden ist.

Die Übertragung von Informationen im Internet ist ein Beispiel für Kommunikationsnetze, über die Informationen in Paketen mit vergleichsweiser großer und variabler Länge übertragen werden. Hier wird das Internet-Protokoll TCP/IP verwendet, das die Übertragung von Rahmen mit variabler Länge unterstützt. In der Praxis weisen diese Netze eine Schnittstelle zu ATM-Netzen auf. Aus diesem Grunde müssen die in Datenpaketen enthaltenen Informationen in ATM-Zellen umgesetzt werden und umgekehrt.

Hierzu wird beispielsweise ein Rahmen-Anfangskennwert gespeichert, das die der ersten ATM-Zelle des Rahmens unmittelbar vorgeordnete ATM-Zelle in der Warteschlange bezeichnet. Diese Information ist üblicherweise im Zellenkopf der letzten Zelle des Rahmens vorhanden, nämlich in der Regel in dem sogenannten AAU-Bit in dem Zellentypfeld (payload type field) des Zellenkopfes. Weiterhin wird eine Numerierung der ATM-Zellen vorgenommen, so daß letztendlich die Mehrzahl der ATM-Zellen einem Datenpaket zuordenbar ist.

In der deutschen Patentanmeldung 198 100 58.2 wird ein weiteres Verfahren beschrieben, wie ATM-Zellen beim Auftreten von Überlastsituationen in einem Rahmens entfernt werden können. Dieses Verfahren, das auch als LPD Verfahren bezeichnet wird, ist insbesondere dann nützlich, wenn entschieden wird, den zweiten Teil des Rahmens zu verwerfen, während der erste Teil noch sich in der Warteschlange des ATM-Systems befindet. In diesem Fall wird der erste Teil des Rahmens aus der Warteschlange entfernt und die verbleibenden Zellen werden wie im Falle des EPD Verfahrens behandelt. Dabei entsteht jedoch das Problem einer ineffizienten Behandlung der Zellen im Falle der Überlast.

Der Erfindung liegt die Aufgabe zugrunde, einen Weg aufzuzeigen, wie Zellen effizient im Überlastfall zu behandeln sind.

Vorteilhaft an der Erfindung ist insbesondere, daß Regeln aufgestellt werden, durch deren Anwendung das PPD-Verfahren nur noch sehr eingeschränkt zur Anwendung gelangt.

Vorteilhafte Ausbildungen der Erfindung sind in den Unteransprüchen vorgesehen.

Die Erfindung wird im folgenden anhand eines Ausführungsbeispiels näher erläutert.

Es zeigen:
- Fig. 1: den ersten Teil des Algorithmus, der die Zellen bei Zellenankunft behandelt,
- Fig. 2: den zweiten Teil des Algorithmus, der eine Entscheidungsfunktion beschreibt, nach deren Maßgabe die Zellen verworfen werden.

Die Erfindung geht von der Voraussetzung aus, daß ATM-Zellen den Warteschlangen einer ATM-Kommunikationseinrichtung zugeführt werden. Einige der Zellen werden verworfen, während die verbleibenden Zellen die Warteschlangen zu einem späteren Zeitpunkt verlassen. Für jede Verbindung existiert eine bestimmte maximale Rahmengröße MFS, die in Zellen gemessen wird, wobei diese Größe von der Verbindung abhängig ist. Weiterhin wird davon ausgegangen, daß das CLP-Bit im Zellentypfeld (payload type field) des Zellenkopfes der ATM-Zelle im ATM-Knoten ausgewertet wird. Der Anwender kann Informationen in hochprioren und niederprioren Rahmen senden. Die Zellen der hochprioren Rahmen weisen CLP = 0 auf (nicht markiert), während die Zellen mit niederprioren Rahmen CLP = 1 (markiert) aufweisen.

Bei allen in Betracht gezogenen Verbindungen wird davon ausgegangen, daß die zugehörigen Zellen in Rahmen organisiert sind, wobei das AAU-Bit im Pay-Load-Typ-Feld des Headers der letzten Zelle des Rahmens gesetzt ist. Alle Zellen sollen anwendungsbezogene Informationen aufnehmen. Weiterhin sollen alle in Warteschlangen gespeicherte ATM-Zellen warteschlangenspezifische Markierungen QID aufweisen, wobei die Warteschlangen selbst verbindungsspezifisch organisiert sind. Die Warteschlangen sind als FIFO-Warteschlange sind in Form einer einer geordneten Liste von ATM-Zellen ausgebildet.

Im folgenden soll die Datenstruktur der Warteschlangen, der globalen Konstanten und der globalen Variablen definiert werden. Zunächst werden einzelne Operationen vorgestellt, die an den Zellen ausgeführt werden können. Es wird angenommen, daß jede der Zellen eine eindeutige Kennung besitzt, die mit P_cell bezeichnet wird. Die Operationen sind sind im einzelnen:

### Zellen-Operationen:

Die folgenden Operationen werden mit ATM-Zellen durchgeführt, denen eine gültige Zellenidentifikationsnummer P_cell zugeordnet ist. Hierbei gilt:
- end_of_frame(P_cell): wird auf den Wert TRUE gesetzt, wenn das Ende des Rahmens erreicht ist,
andernfalls wird diese Variable auf den Wert FALSE gesetzt
- Discard_cell(P_cell): verwirft Zellen mit der Identifikationsnummer P_cell
- Decide_cell (P_cell): bezeichnet den Algorithmus wie er weiter unten näher erläutert wird.

### Operationen der Warteschlangen-Datenstruktur:

Die folgenden Operationen können in der Warteschlange ausgeführt werden:
- append_cell(P_cell): fügt die Identifikationsnummer P_cell am Ende einer Warteschlange ein
- remove_last_frame: der LPD-Algorithmus verwirft alle Zellen des in Frage kommenden Rahmens
die Variable gibt den Wert TRUE zurück, wenn der LPD-Algorithmus auf die Verbindung anwendbar ist,
andernfalls den Wert FALSE.

### Operation im Pufferinhalt:

Die folgenden Operationen können im Pufferinhalt durchgeführt werden:
- Buffer_check_0: gibt den Wert TRUE zurück, wenn der Pufferinhalt anzeigt, daß hochpriore Rahmen (CLP = 0) verworfen werden sollen andernfalls wird FALSE zurückgegeben
- Buffer_check_1: gibt den Wert TRUE zurück, wenn der Pufferinhalt anzeigt, daß niederpriore Rahmen (CLP = 1) verworfen werden sollen andernfalls wird FALSE zurückgegeben

### Datenstrukturen einer Warteschlange:

Für jede Verbindung und der dieser zugeordnete Warteschlange gibt es eine Identifikationsnummer QID. Damit werden folgende Daten gespeichert:
- Anzeige ob die Variable 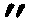 full packet discard" sich auf die Zellen des gegenwärtigen Rahmens (FPD_flag) anwenden läßt. Dies ist gleichbedeutend mit der Aussage, daß der LPD- oder EPD-Algorithmus angewendet wird.
- Anzeige, ob PPD-Algorithmus auf die Zellen des gegenwärtigen Rahmens (PPD_flag) angewendet wird.
- die Variable 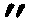 logical queue length" bezeichnet einen Zellen-Zähler der die gegenwärtige Anzahl der Zellen in der Warteschlange angibt.
- die Variable S_EPD_0 bezeichnet die feste Schwelle einer Warteschlange für die Anwendung des EPD-Algorithmus auf niederpriore Zellen
- die Variable MFS bezeichnet die maximale Rahmengröße
- die Variable Current_frame_length bezeichnet einen Zellenzähler, der für nicht verworfene Zellen der Verbindung um 1 erhöht wird. Die Variable wird zurückgesetzt bei Eintreffen der letzten Zelle eines Rahmens.

### Globale Konstanten:

Folgende globale Konstanten werden verwendet:
- die Konstante S_PPD_0 bezeichnet eine feste obere Grenze der Warteschlange (für alle QID's)
- die Konstante S_EPD_1 bezeichnet die feste Schwelle für early packet discard für CLP1 Zellen (für alle QID's) In anderen Varianten des Algorithmus können die globalen Konstanten verschieden sein für verschiedene Gruppen von Verbindungen oder sie können verbindungsspezifisch sein.

### Folgende Anfangswerte werden zugewiesen:

FPD_flag = FALSE
PPD_flag = FALSE
Current_frame_length = 0

Weiterhin gelten die folgenden Beziehungen für die obengenannten Konstanten:
S_EPD_1>0
S_PPD_1=S_EPD_1+MFS
S_EPD_0>S_PPD_1
S_PPD_0>S_EPD_0+MFS

Das erfindungsgemäße Verfahren besteht aus insgesamt 2 Teilen. Im ersten Teil gelangt der Algorithmus bei Zellenankunft zum Ablauf, während im zweiten Teil ein Entscheidungsalgorithmus gesteuert wird.

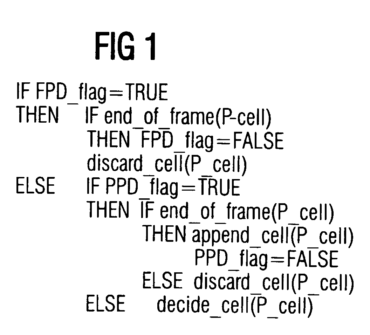

In Figur 1 ist der Algorithmus aufgezeigt, wie er bei Ankunft einer ATM-Zelle zum Ablauf gelangt. Demgemäß wird zunächst das FPD_flag überprüft. Wenn das FPD_flag den Wert TRUE angenommen hat, wird die Zelle verworfen. Wenn diese Zelle die letzte Zelle des Rahmens war, wird der FPD-Algorithmus nicht auf die Ankunft der nächsten Zellen derselben Verbindung angewendet. Wenn das FPD_flag den Wert FALSE angenommen hat, wird die Anwendung des PPD-Algorithmus überprüft. Wenn der PPD-Algorithmus angewendet wird, wird immer die Zelle verworfen, die nicht die letzte Zelle eines Rahmens darstellt. Andernfalls wird die zelle in die Warteschlange übernommen und der PPD-Algorithmus wird nicht für die nächste Ankunft einer Zelle angewendet. Wenn der PPD-Algorithmus nicht angewendet wird, können aber andere Annahme-Algorithmen für eine Zelle gesteuert werden. Beispielsweise kann die Funktion append_cell verwendet werden oder die Zelle verworfen werden.

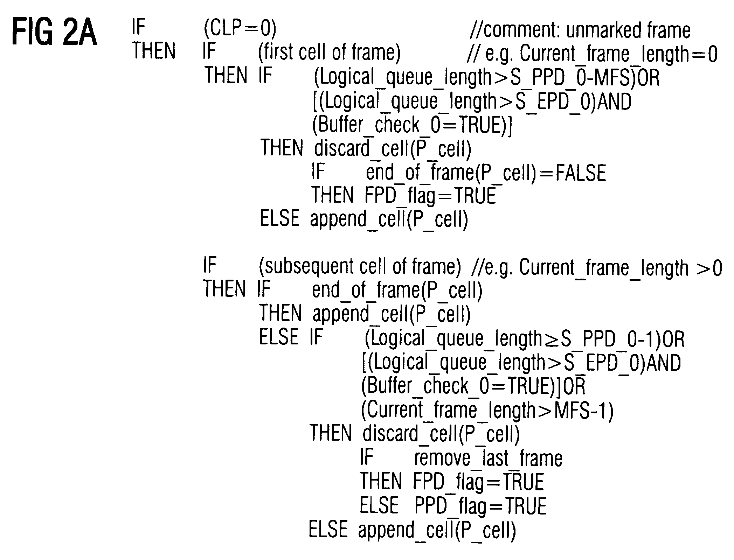

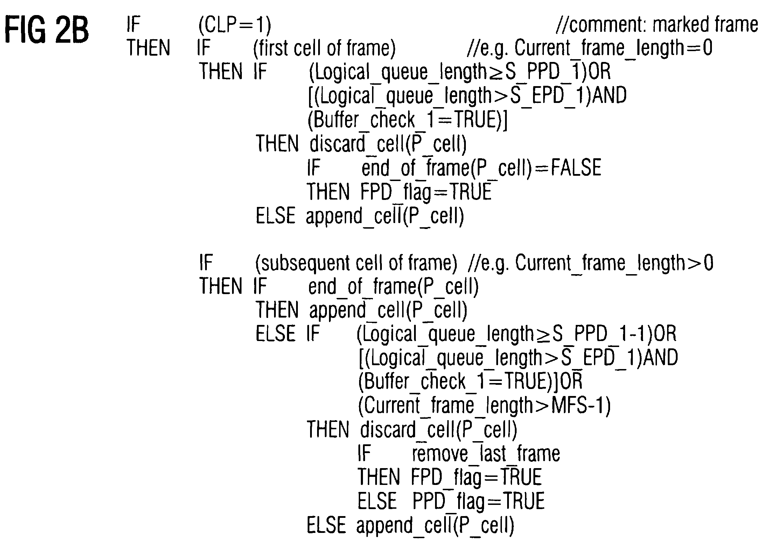

In Figur 2 ist der Entscheidungsalgorithmus aufgezeigt. Hierbei werden niederpriore Zellen von Hochprioren Zellen unterschieden. Für hochpriore Zellen (CLP = 0) gilt:

Wenn die in Frage kommende Zelle die erste Zelle des Rahmens ist, muß zunächst entschieden werden, ob diese Zelle und die verbleibenden Zellen des Rahmens verworfen werden oder ob die Zelle in die Warteschlange aufgenommen wird. Gründe, den Rahmen zu verwerfen, liegen beispielsweise darin, daß die Warteschlange weniger freien Zellenspeicherplatz zur Verfügung hat, als die Größe MFS. Weitere Gründe können darin liegen, daß die Länge der Warteschlange sich oberhalb der EPD_0 Schwelle befindet und der Zustand des Pufferspeichers zugleich anzeigt, daß hochpriore Rahmen verworfen werden solen.

Wenn die Zelle die einzige Zelle des Rahmens ist, stellt sie gleichzeitig das Ende des Rahmens dar und das FPD_flag wird nicht gesetzt, andernfalls wird es gesetzt.

Wenn die Zelle nicht die erste Zelle des Rahmens ist, werden eine oder mehr Zellen des Rahmens in die Warteschlange aufgenommen, Andernfalls wird die decide_cell Funktion nicht angewendet. Wenn sie die letzte Zelle des Rahmens ist, wird sie in jedem Fall akzeptiert und in die Warteschlange aufgenommen. Wenn sie nicht die letzte Zelle des Rahmens ist, wird die Zelle verworfen, wenn folgende Bedingung erfüllt ist:

Es muß höchstens ein freier Speicherplatz für eine Zelle in der Warteschlange vorhanden sein oder wenn die derzeitige Länge der Warteschlange oberhalb der Schwelle EPD_0 ist und der Pufferspeicher anzeigt, daß hochpriore Rahmen verworfen werden sollen oder wenn die bisherige Länge des Rahmens oberhalb der Größe MFS - 1 ist. Der Grund für eine freie Zelle liegt darin, genügend Speicherplatz für die letzte Zelle des Rahmens vorzuhalten. Der Grund für die Größe MFS - 1 liegt darin, daß die Zelle nicht die letzte Zelle des Rahmens ist und wenn die gegenwärtige Länge des Rahmens die Größe MFS - 1 übersteigt auch der komplette Rahmen die Größe MFS übersteigt. Wenn die Zelle verworfen werden soll, sollte, wenn möglich, der erste Teil des Rahmens von der Warteschlange entfernt werden und das FPD_flag gesetzt werden. Andernfalls wird das PPD_flag gesetzt.

Für niederpriore Zellen,das heißt Zellen, die die Eigenschaft CLP = 1 aufweisen, sind die durchzuführenden Handlungen ähnlich wie oben geschildert, aber die Schwellen werden wie folgt für niederpriore Zellen definiert:

Die Variable Logical_queue_length ist die Länge der Warteschlange bei Ankunft der Zelle und die Variable Current_frame_length gibt den Wert der Variablen bei Zellankunft wieder. Anfangs wird die Variable Current_frame_length auf 0 gesetzt. Sie wird um 1 erhöht, wenn eine Zelle in die Warteschlange aufgenommen wird. Sie wird auf 0 gesetzt, wenn das Ende des Rahmens angekommen ist oder wenn der letzte Rahmen aus der Warteschlange unter Benutzung des LPD-Algorithmus entfernt worden ist. Die erste Zelle des Rahmens wird in der Regel durch die Variable Current_frame_length = 0 erkannt.

## Patentansprüche

1. Verfahren zum Entfernen von ATM-Zellen aus einer ATM-Kommunikationseinrichtung, mit
einer Mehrzahl von ATM-Zellen, die jeweils zu mehreren einem gemeinsamen Rahmen zugeordnet sind, und die in verbindungsspezifischen Warteschlangen gespeichert werden, und mit
einem ersten Algorithmus (PPD), mittels dem bis auf die erste und letzte ATM-Zelle eines Rahmens alle neu eintreffenden Zellen des Rahmens entfernt werden,
einem zweiten Algorithmus (EPD), mittels dem alle ATM-Zellen eines Rahmens, von der ersten bis zur letzten Zelle beim Eintreffen in eine Warteschlange aus der ATM-Kommunikationseinrichtung entfernt werden,
**dadurch gekennzeichnet**,
daß ein Anwender zu Beginn des Übertragungsvorganges die maximale Anzahl der ATM-zellen pro Rahmen (MFS) angibt, mit der ATM-Zellen gesendet werden,
daß im Falle, daß diese Anzahl überschritten wird, der zugehänge Rahmen verworfen oder der erste Algorithmus (PPD) angewendet wird.

2. Verfahren nach Anspruch 1,
**dadurch gekennzeichnet**,
daß die Länge der Warteschlange verbindungsindividuell verwaltet ist.

3. Verfahren nach Anspruch 1 oder 2,
**dadurch gekennzeichnet**,
daß eine konstante Größe (MFS) pro Verbindung benutzt wird, die ein Maß für die maximale Rahmengröße der Verbindung ist.

4. Verfahren nach Anspruch 1 bis 3,
**dadurch gekennzeichnet**,
daß pro Verbindung die Anzahl der Zellen gespeichert wird, die für diese Verbindung seit dem Ende des letzten Rahmens für diese Verbindung eingetroffen sind.

5. Verfahren nach einem der vorstehenden Ansprüche,
**dadurch gekennzeichnet**,
daß keine hochprioren Zellen für eine Verbindung gespeichert werden, wenn die Länge der Warteschlange für diese verbindung gleich einer von dieser Verbindung unabhängige Größe (S_PPD_0) ist, die ein Maß für eine feste obere Grenze der Warteschlange darstellt.

6. Verfahren nach einem der vorstehenden Ansprüche,
**dadurch gekennzeichnet**,
daß wenn hochpriore Rahmen die maximale Rahmengröße (MFS) nicht überschreiten, der erste Algorithmus (PPD) für diese Rahmen nicht angewendet wird.

7. Verfahren nach einem der vorstehenden Ansprüche,
**dadurch gekennzeichnet**,
daß eine bestimmte Größe des Pufferspeichers für hochpriore Zellen pro Verbindung vorgehalten wird und niederpriore Zellen zu diesem Speicherbereich keinen Zugang erhalten.

8. Verfahren nach einem der vorstehenden Ansprüche,
**dadurch gekennzeichnet**,
daß keine niederprioren Zellen für eine Verbindung gespeichert werden, wenn die Länge der Warteschlange für diese Verbindung wenigstens einer Größe S_PPD_1 = S_EPD_1 + MFS ist, wobei S_EPD_1 unabhängig von dieser Verbindung ist und maximale Rahmengröße (MFS) von der Verbindung abhängt.

9. Verfahren nach einem der vorstehenden Ansprüche,
**dadurch gekennzeichnet**,
daß hochpriore Rahmen vollkommen verworfen werden, wenn bei Ankunft der ersten Zelle einer Verbindung weniger als die maximale Rahmengröße (MFS) in der logischen Warteschlage für diese Verbindung übrigbleibt oder die logische Warteschlange die S_EPD_0 Schwelle überschreitet und der Zustand des Pufferspeichers anzeigt, daß hochpriore Rahmen verworfen werden sollen.

10. Verfahren nach einem der vorstehenden Ansprüche,
**dadurch gekennzeichnet**,
daß hochpriore Rahmen teilweise verworfen werden, wenn bei Ankunft einer Zelle, die weder die erste noch die letzte Zelle eines Rahmens ist, die logische Werteschlange höchstens einen Speicherplatz frei hat, oder wenn die Länge der logischen Warteschlange einen verbindungsspezifischen Schwellenwert S_PPD_0 überschreitet oder wenn der Füllstand des Pufferspeichers andeutet, daß hopchpriore Rahmen verworfen werden sollen oder wenn die Länge des Rahmens länger als die maximale Rahmengröße (MFS) Zellen beträgt.

11. Verfahren nach einem der vorstehenden Ansprüche,
**dadurch gekennzeichnet**,
daß niederpriore Rahmen komplett verworfen werden, wenn bei Ankunft der ersten Zelle dieser Verbindung die Länge der Warteschlange für diese Verbindung größer als eine Variable S_PPD_1 ist oder wenn die Länge der Warteschlange länger als eine Größe S_EPD_1 ist und der Zustand des Pufferspeichers anzeigt, daß niederpriore Rahmen verworfen werden sollen.

12. Verfahren nach einem der vorstehenden Ansprüche,
**dadurch gekennzeichnet**,
daß niederpriore Rahmen für eine Verbindung teilweise verworfen werden, wenn bei Ankunft einer Zelle, die weder die erste noch die letzte Zelle des Rahmens ist, die Länge der Warteschlange für diese Verbindung größer als eine Variable S_PPD_1 - 1 ist oder die Länge der Warteschlange größer als eine Variable S_EPD_1 ist und der Pufferspeicherstatus anzeigt, daß niederpriore Rahmen verworfen werden sollen oder wenn der Rahmen länger als die maximale Rahmengröße (MFS) ist.

13. Verfahren nach einem der vorherstehenden Ansprüche,
**dadurch gekennzeichnet**,
daß der warteschlangenspezifische Wert S_EPD_0 größer als der Wert S_PPD_1 und kleiner als der Wert PPD_0 - MFS ist, wobei der Wert S_PPD_0 ein Maß für eine feste obere Grenze der Warteschlange darstellt.

14. Verfahren nach einem der vorstehenden Ansprüche,
**dadurch gekennzeichnet**,
daß für Pufferspeicher mit geringer Füllung hochpriore Rahmen deren erste Zelle übernommen worden ist und deren Rahmenlänge die maximale Rahmengröße (MFS) nicht überschreitet, nicht dem ersten Algorithmus (PPD) unterworfen werden.

15. Verfahren nach einem der vorstehenden Ansprüche,
**dadurch gekennzeichnet**,
daß für Pufferspeicher mit geringer Füllung niederpriore Rahmen deren erste Zelle übernommen worden ist und deren Rahmenlänge die maximale Rahmengröße (MFS) nicht übersteigt, dem ersten Algorithmus (PPD) nicht unterworfen werden.

16. Verfahren nach einem der vorstehenden Ansprüche,
**dadurch gekennzeichnet**,
daß das EPD-flag und das FPD_flag nicht zur gleichen Zeit gesetzt werden.

17. Verfahren nach einem der vorstehenden Ansprüche,
**dadurch gekennzeichnet**,
daß pro Verbindung die Werte MFS + S_EPD_0 gespeichert werden und die Variablen EPD_FLAG,FPD_FLAG und current_Frame_length verwaltet werden, wobei die Variable current_Frame_length ein Maß für die Länge des momentanen Rahmens ist.
